# EUROPÄISCHE PATENTSCHRIFT

(11) **EP 3 641 369 B1**
(45) Veröffentlichungstag und Bekanntmachung des Hinweises auf die Patenterteilung: **06.07.2022**
(21) Anmeldenummer: 19000473.9
(22) Anmeldetag: 16.10.2019
(51) Int. Cl.: H04W 12/069, H04W 12/40, H04W 12/06, H04W 12/00, H04L 9/32, G06F 21/33, G06F 21/34, H04L 9/08

(54) **ABSICHERUNG EINER P2P-KOMMUNIKATION**
PROTECTION OF P2P COMMUNICATION
SÉCURISATION D'UNE COMMUNICATION POSTE À POSTE

(30) Priorität: 18.10.2018 DE 102018008271
(43) Veröffentlichungstag der Anmeldung: 22.04.2020
(73) Patentinhaber: Giesecke+Devrient Mobile Security GmbH, 81677 München (DE)
(72) Erfinder: Stöhr, Volker, 81827 München (DE); Kamm, Frank-Michael, 83607 Holzkirchen (DE); Gerhardt, Nils, 80333 München (DE); Chalupar, Andreas, 81829 München (DE)
(74) Vertreter: Giesecke + Devrient IP

(56) Entgegenhaltungen:
- DE-A1-102017 000 768
- DE-B3-102011 013 562
- JP-A- 2012 049 752

## Beschreibung

Die vorliegende Erfindung betrifft ein Verfahren zum Absichern einer Peer-to-Peer-Kommunikation zwischen zwei Endgeräten, das es ermöglicht, herkömmliche, bereits personalisierte Smartcards zu verwenden ohne dass besonders angepasste Hardware-Token bereitgestellt werden müssen. Insbesondere ermöglicht es die vorliegende Erfindung, eine sichere Datenkommunikation durchzuführen, ohne dass eine Modifikation der zugrundeliegenden Hardware notwendig ist. Die Erfindung betrifft ferner eine entsprechend eingerichtete Kommunikationsanordnung zum Absichern einer Peer-to-Peer-Kommunikation sowie ein Computerprogrammprodukt mit Steuerbefehlen, welche das Verfahren implementieren bzw. die Kommunikationsanordnung betreiben.

Bekannt sind Verfahren, bei denen softwaretechnisch eine Kommunikation zwischen zwei Entitäten abgesichert wird. Bevorzugt finden hierbei kryptographische Verfahren Anwendung, die entweder auf die Daten an sich abstellen und diese verschlüsseln, oder aber den Kommunikationskanal derart absichern, dass unterschiedliche Angriffsszenarien unterbunden werden. Eines dieses Angriffsszenarien ist der sogenannte Replay-Angriff, bei dem eine unberechtigte dritte Instanz eine Datenkommunikation zwischen zwei berechtigten Instanzen abhört und die aufgenommene Datenkommunikation sodann wieder vorspielt. Beispielsweise authentifiziert sich eine erste Instanz bei einer zweiten Instanz über einen Kommunikationskanal, welcher unsicher ist und abgehört wird. Da hierbei valide Authentifizierungsdaten übermittelt werden, ist es einer dritten Instanz möglich, diese Kommunikation sodann wieder gegenüber der zweiten Instanz vorzuspielen und somit Zugriff auf Daten und Dienste zu erhalten.

Hardwaretechnisch sind Lösungen bekannt, welche darauf abstellen, dass der Benutzer ein Hardware-Token mit sich führt, welches besonders gegen Angriffe gesichert ist. Diese Hardware-Token weisen elektronische Komponenten auf, welche eingerichtet sein können, kryptographische Schlüssel sicher zu speichern und damit innerhalb des Hardware-Tokens kryptographische Operationen auszuführen und dem Benutzer bereitzustellen. Nachteil bei einem solchen Verfahren ist es, dass das Bereitstellen des Hardware-Tokens aufwendig ist; zudem ist der Benutzer oft nicht gewillt, ein weiteres Gerät mitzuführen. Dies kann die Benutzerakzeptanz eines solchen Verfahrens schmälern.

Bekannt sind ferner Lösungen gemäß dem FIDO-Standard. Dabei erfolgt eine einseitige Authentisierung eines Nutzers gegenüber einem zentralen Service. Die Authentisierung setzt eine frühere Registrierung bei genau diesem zentralen Service voraus. Aus diesem Grund sind Lösungen gemäß dem FIDO-Standard für eine direkte Authentisierung eines Benutzers gegenüber einem beliebigen anderen Benutzer nicht ohne weiteres einsetzbar. Die Authentisierung des zentralen Service gegenüber dem Nutzer erfolgt mit etablierten Verfahren, insbesondere mit SSL/TLS und X.509 Server-Zertifikaten.

Weiter stellt das FIDO Universal Authentication Framework UAF ein universelles Rahmenwerk zur Authentifizierung bereit, mit dem es möglich ist, eine Authentifizierung ohne Kennwort durchzuführen. Dieses Rahmenwerk unterstützt beispielsweise biometrische Merkmale. Der Benutzer authentisiert sich gemäß dem UAF-Standard gegenüber seinem persönlichen mobilen Endgerät mittels seines Wissens, wie zum Beispiel einer PIN oder einem Passwort und/oder biometrischen Merkmalen.

Bei der Zweifaktorauthentifizierung kommt bevorzugt der Industriestandard U2F (Universal Second Factor, universeller zweiter Faktor) zum Einsatz. Die U2F-Spezifikation wird von der FIDO-Allianz (Fast Identity Online) verwaltet.

Bekannt ist weiter das sogenannte Universal Authentication Framework UAF, das von der FIDO-Allianz standardisiert wird. Entsprechende Spezifikationen sind frei auf der Webseite https://fidoalliance.org/download/ verfügbar. Dies gilt sowohl für die UAF-Spezifikationen, als auch für die U2F-Spezifikationen. Insbesondere lassen sich neben der UAF-Spezifikation 1.1 die weiteren Spezifikationen FIDO UAF Protocol Specification und FIDO 2.0 Spezifikationen herunterladen.

Die Zweifaktorauthentifizierung wird in der Regel initiiert, indem zur Authentifizierung ein Dienstanbieter (Relying Party) als erstem Faktor nach dem Nutzernamen und ggf. nach dem zugehörigen Passwort fragt, wobei der Nutzernamen den Nutzer identifiziert und das Passwort den Nutzer authentisiert. Der Dienstanbieter prüft diese Daten und leitet, wenn die Daten in Ordnung sind, die Überprüfung des zweiten Faktors (Besitz) in Form von U2F ein.

In einem ersten Schritt schickt der Dienstanbieter (Relying Party) ein Datenpaket an einen Kundenrechner, wie beispielsweise einen Web-Browser. Dieses umfasst eine Challenge, dies sind einige zufällig gewählte Daten, eine Applikationskennung (App-ID), und eine Schlüsselkennung (KeyHandle), welche bei der initialen Anmeldung hinterlegt wurde.

Der Kundenrechner prüft die Applikationskennung, ergänzt diese um zusätzliche Daten wie beispielsweise eine Kanalkennung (Channel ID) und leitet diese Daten gehasht an das U2F-Gerät weiter. Bei dem U2F-Gerät kann es sich beispielsweise um einen USB-Dongle mit einem Taster handeln.

Das U2F-Gerät ermittelt mit Hilfe der Schlüsselkennung (KeyHandle) den für diese Sitzung passenden privaten Schlüssel (kpriv), und signiert mit diesem die gehashten Werte der Applikationskennung und der Challenge und bildet so die signierte Retourantwort.

Zusätzlich wird ein Zähler (Counter) in die Antwort integriert, um duplizierte U2F-Geräte erkennen zu können. Der Kundenrechner, wie beispielsweise der Web-Browser, leitet diese Daten an den Dienstanbieter weiter, der mit dem Public Key die Signatur s und die darin enthaltenen Daten prüft und, falls diese in Ordnung sind, den Zugang gewährt.

Herausforderung bei FIDO-U2F ist, dass es dafür ausgelegt ist an einem PC oder dergleichen eingesetzt zu werden, an dem auch ein USB-Dongle als zweiter Faktor in eine USB-Schnittstelle eingesetzt werden kann. Es ist zwar möglich den zweiten Faktor über NFC oder Bluetooth vorzuweisen, jedoch werden in diesem Fall spezielle Authentikatoren gefordert, die in der Regel eigens und ausschließlich für die Verwendung für FIDO beschafft werden müssen.

Nachteil der bekannten Verfahren ist es, dass softwaretechnische Lösungen oftmals nicht sicher sind und zumindest nach einem bestimmten Zeitraum Sicherheitslücken entdeckt werden. Wird hingegen eine hardwaretechnische Lösung verwendet, so besteht der Nachteil, dass diese Hardware erst angeschafft und verteilt werden muss und der Benutzer darüber hinaus oftmals keine Akzeptanz für neue Komponenten aufbringt, die er physisch mit sich führen müsste. Aus der JP 2012049752 A ist ein Verfahren zur Bereitstellung eines auf einer IC-Karte speicherbaren Zertifikates für die Nutzung von digitalen Diensten bekannt, das mittels eines Terminals gegenüber einer Registrierungsstelle und einer Ausgabestelle ausgeführt wird. Der Benutzer registriert sich bei der Registrierungsstelle unter Vorlage eines vorhandenen Identitätsbeweises. Die IC-Karte berechnet ein PKI-Schlüsselpaar und schickt den öffentlichen Schlüssel zusammen mit einem mittels des geheimen Schlüssels gebildeten Zertifikat an die Registrierungsstelle. Diese verifiziert das PKI-Schlüsselpaar und dessen Zugehörigkeit zu der IC-Karte. Aus einer Datenbank ermittelt die Registrierungsstelle persönliche Daten des Benutzers und erzeugt mit dem öffentlichen Schlüssel des PKI-Schlüsselpaares eine Zertifikatanfrage, die sie an die IC-Karte schickt. Die IC-Karte sendet die Zertifikatsanfrage an die Ausgabestelle, welche das Benutzerzertifikat erzeugt und an die IC-Karte zurückgibt. Das Benutzerzertifikat wird von der Registrierungsstelle verifiziert.

DE 102011013562 B3 offenbart ein Verfahren zur Authentisierung für die Durchführung einer vertrauenswürdige Kommunikation zwischen einer ersten Partei und einer zweiten Partei basierend auf einer Kombination von Passwörtern und Zertifikaten.

DE 102017000768 A1 offenbart ein Verfahren zum Durchführen einer Zweifaktorauthentifizierung zwischen einem Client und einer Gegenpartei, wobei als zweiter Faktor ein Datenträger verwendet wird, der eine Kommunikation mit einem Zusatzsserver durchführt.

### [weiter mit ursprünglicher S. 5]

Generell besteht ein Bedarf an besonders einfachen Verfahren, welche aus Sicht der Benutzer wenig aufwendig sind und insbesondere mit bestehender Hardware durchgeführt werden können.

Es ist Aufgabe der vorliegenden Erfindung, ein Verfahren anzugeben, das es zwei nicht bei einer gemeinsamen Registrierungsinstanz registrierten Kommunikationspartnern erlaubt, eine Peer-to-Peer-Kommunikation durchzuführen, die sich durch eine hohe Sicherheit auszeichnet und mit bestehender Hardware betrieben werden kann. Ferner sollen eine entsprechende Kommunikationsanordnung vorgeschlagen werden sowie ein Computerprogrammprodukt mit Steuerbefehlen, welche das Verfahren ausführen bzw. die Kommunikationsanordnung betreiben.

Die Aufgabe wird gelöst mit den Merkmalen der unabhängigen Patentansprüche. Weitere vorteilhafte Ausgestaltungen sind in den Unteransprüchen angegeben.

Vorgeschlagen wird ein Verfahren zum Absichern einer Peer-to-Peer-Kommunikation zwischen zwei Endgeräten mittels Smartcards, gemäß dem Anspruch 1.

Die erfindungsgemäße Lösung ermöglicht eine gegenseitige Authentisierung von zwei Nutzern, ohne dass diese sich dafür vorab besonders registrieren müssen. Ausreichend ist es vielmehr, dass die Nutzer jeweils bei einer vertrauenswürdigen Dritten Instanz registriert sind.

Die erfindungsgemäße Lösung ermöglicht eine Erhöhung des Vertrauens in die Identität des Kommunikationspartners und der Vermeidung von sogenannten Man-in-the-middle-Angriffen.

Der Fachmann erkennt hierbei, dass die Verfahrensschritte iterativ ausgeführt werden können und insbesondere weitere Unterschritte notwendig sein können. Insbesondere ist es möglich, dass die Verfahrensschritte auf einer Senderseite ausgeführt werden und sodann auch auf einer Empfängerseite ausgeführt werden. Dies ermöglicht ein beidseitiges Absichern der Kommunikation. Werden also im Folgenden Verfahrensschritte beschrieben, so ist es auch möglich, dass Sender und Empfänger wechselseitig auftreten und somit die Verfahrensschritte auf beiden Seiten ausgeführt werden.

Bei der vorgeschlagenen Peer-to-Peer-Kommunikation handelt es sich um eine Datenkommunikation zwischen zwei Endgeräten, welche bevorzugt als mobile Endgeräte wie Mobiltelefone vorliegen. Hierbei ist die Art der Datenkommunikation nicht eingeschränkt, sondern vielmehr soll jegliche Datenkommunikation erfindungsgemäß abgesichert werden.

Bei einer Smartcard handelt es sich häufig um eine Chipkarte im Kreditkartenformat oder generell um einen kleinformatigen, taschengängigen tragbaren Datenträger in einem Kartenformat; daneben können Smartcards aber auch in anderen Formaten vorliegen, zum Beispiel als Sticker, als Schlüsselanhänger, als Wearable oder auch in virtualisierter Form. Typischerweise weisen Smartcards elektronische Komponenten auf, welche Datenkommunikation und Datenverarbeitung ermöglichen. So umfassen Smartcards Mikrocontroller und Speicher, die es ermöglichen, dass kryptographische Informationen erzeugt werden können. Erfindungsgemäß wurde erkannt, dass solche Smartcards mit technischem Fortschritt immer leistungsfähiger werden und somit auch in kryptographische Verfahren eingebunden werden können.

Die Datenkommunikation zwischen Smartcards und den Endgeräten erfolgt bevorzugt über eine Luftschnittstelle. Hierzu verfügt die Smartcard über eine Antennenspule, die geeignet ist, einen Strom zu induzieren bzw. die Datenübertragung zu bewerkstelligen. Hierbei ist es jedoch auch denkbar, dass die Smartcards mit einer Stromversorgung ausgestattet sind, wozu Batterien geeignet sind. In einem bevorzugten Anwendungsfall kommuniziert die Smartcard derart, dass diese an ein Lesegerät bzw. an das mobile Endgerät vorgehalten wird und hieraufhin ein Strom induziert wird, der temporär die elektrische Versorgung der Komponenten bewerkstelligt. Beispielhaft kann die Kommunikation zwischen einer Smartcard und einem Endgerät kontaktbehaftet oder kontaktlos, etwa mittels Nearfield-Kommunikation bewerkstelligt werden.

In einem vorbereitenden Schritt erfolgt jeweils eine Registrierung jedes Benutzers bei einer Zertifizierungsstelle, die als vertrauenswürdige Instanz agiert. Es obliegt dem Benutzer, sein Endgerät bei einer vertrauenswürdigen Zertifizierungsstelle zu registrieren. Bei der Zertifizierungsstelle wird der Nutzer zusammen mit seinem Sicherheitselement, etwa einer Smartcard registriert. Die Zertifizierungsstelle kennt die Daten, die den Benutzer und das Sicherheitselement, also etwa die Smartcard, identifizieren. Technisch handelt es sich bei der Zertifizierungsstelle typischerweise um einen Server, der kommunikativ mit dem Endgerät bzw. den Endgeräten gekoppelt ist. Hierbei ist es vorteilhaft möglich, dass die Endgeräte jeweils mit einer eigenen, gesonderten Zertifizierungsstelle datentechnisch gekoppelt sein können. Die mobilen Endgeräte sind so eingerichtet, dass sie auch vertrauenswürdige Daten an die Zertifizierungsstelle übermitteln können.

Im Rahmen der Registrierung wird die Identität des Benutzer durch ein geeignetes Verfahren festgestellt, indem die persönlichen Daten des Nutzers geprüft werden. Generell geeignet sind Verfahren, die per Onlineverbindung eine entfernte und vertrauenswürdige Identifizierung des Benutzers ermöglichen. Das kann z.B. mit Hilfe elektronischer ID Karten erfolgen, z.B. einem Personalausweis. Zweckmäßig geschieht die Prüfung in einem sogenannten Video-Ident-Verfahren. Die Zertifizierungsstelle agiert hierbei als ein Server, der aus entsprechenden Datenrahmen die benötigte Information ausliest. Für die Identitätsfeststellung hält der Benutzer ein Ausweisdokument, z.B. eine elektronische ID-Karte, vor eine Kamera und tauscht mit einem Mitarbeiter der Zertifizierungsstelle Daten aus.

Desweiteren weist der Benutzer den Besitz des Sicherheitselementes nach. Dies kann z.B. durch eine EMV-Authentisierung erfolgen, wenn das Sicherheitselement eine EMV-Karte ist. Im Rahmen des Datenaustauschs wird zweckmäßig auch das Sicherheitselement geprüft, z.B. über eine NFC-Schnittstelle, um eine sichere Übertragung aller notwendigen Daten zu gewährleisten.

Durch die Registrierung wird eine Verknüpfung zwischen dem Nachweis des Besitzes der Smartcard - sowie optional einem weiteren Faktor, z.B. der Kenntnis eines Passwortes - und der Identität des Benutzers hergestellt und die dabei erlangten persönlichen Daten des Benutzers werden gespeichert. Die Registrierung erfolgt in der Regel einmalig. Sie erlaubt es bei zukünftigen Authentisierungen, die Identität des Benutzers alleine anhand des Nachweises des Besitzes der Smartcard bzw. gegebenenfalls zusätzlich anhand des Nachweises eines weiteren Faktors festzustellen und ihm die verifizierten persönlichen Benutzerdaten zuzuordnen. Es ist möglich, dass der Benutzer einem Mitarbeiter der Zertifizierungsstelle persönlich bekannt ist, oder aber auch biometrische Daten bereitstellt, welche automatisiert ausgelesen werden. Generell ist es auch möglich, dass der Benutzer eine Filiale der Zertifizierungsstelle aufsucht.

Im Rahmen des Registrierungsprozesses ist es möglich, dass der Benutzer weitere persönliche Informationen bzw. Benutzerdaten bereitstellt, da diese Zertifizierungsstelle als vertraulich gilt. So kann der Benutzer nach eigenem Wunsch persönliche Benutzerdaten angeben und ggf. ein Passwort vergeben. Vorteilhaft müssen die persönlichen Benutzerdaten lediglich gegenüber der Zertifizierungsstelle angegeben werden und werden nicht mit anderen mobilen Endgeräten ausgetauscht.

Das mit dem geheimen Schlüssel der Zertifizierungsstelle signierte Benutzerzertifikat umfasst sowohl persönliche Benutzerdaten als auch einen öffentlichen Schlüssel des Benutzers. Eine Gegenseite kennt den öffentlichen Schlüssel der Zertifizierungsstelle und kann damit das Benutzerzertifikat prüfen. Bei einem öffentlichen Schlüssel handelt es sich um eine Information eines kryptographischen Verfahrens, wobei ein Zugriff auf Daten und Dienste dann ermöglicht wird, falls eine Entität sowohl den öffentlichen Schlüssel als auch den Besitz des zugehörigen geheimen privaten Schlüssel nachweisen kann. Der öffentliche Schlüssel liegt als eine Information vor, welche über ein Netzwerk an weiteren Komponenten verteilt werden kann. So benötigt die Gegenseite einer Datenkommunikation stets den öffentlichen Schlüssel einer Zertifizierungsstelle, um ein Benutzerzertifikat auszulesen bzw. überprüfen zu können. Verfahren zur Erzeugung von öffentlichen Schlüsseln sind in der Fachwelt bekannt.

Sodann erfolgt ein Signieren einer Anfragenachricht durch die Smartcard und Anfügen des erzeugten Benutzerzertifikats an die signierte Anfragenachricht. Die resultierende Information wird als Prüfinformation bezeichnet. Sie weist mindestens die signierte Anfragenachricht und das bezeugte Benutzerzertifikat auf. Die Anfragenachricht kann dabei umgeformt sein und z.B. in Form eines Hash-Wertes vorliegen.

Beim Übermitteln der Prüfinformation an ein weiteres mobiles Endgerät werden die signierte Anfragenachricht, auch als signierte Challenge-Nachricht bezeichnet, und das Benutzerzertifikat datentechnisch übermittelt. Bei dem weiteren mobilen Endgerät handelt es sich um den Kommunikationspartner des mobilen Endgeräts, der ebenfalls registriert wird. Anhand der übermittelten Prüfinformation ist es dem weiteren mobilen Endgerät möglich, unter Verwendung des öffentlichen Schlüssels der Zertifizierungsstelle die Prüfinformation zu verifizieren. Dabei wird geprüft, ob die erwartete Prüfinformation in dieser Form tatsächlich eingetroffen ist oder ob es eine Manipulation gegeben hat. Wird die Prüfinformation negativ verifiziert, kann das vorgeschlagene Verfahren abgebrochen werden, und die Datenkommunikation gilt als unsicher.

Der Verfahrensschritt des Übermittelns der Prüfinformation kann auch wechselseitig derart erfolgen, dass das erste mobile Endgerät die Prüfinformation an das zweite mobile Endgerät übermittelt und sodann das zweite mobile Endgerät eine andere Prüfinformation an das erste mobile Endgerät übermittelt. Folglich kann das Verfahren iterativ ausgeführt werden, und insbesondere kann der Verfahrensschritt des Übermittelns der Prüfinformation iterativ ausgeführt werden, derart, dass in eine erste Kommunikationsrichtung eine erste Prüfinformation übermittelt wird und in die Rückrichtung, also die zweite Kommunikationsrichtung, eine zweite Prüfinformation übermittelt wird. Dies wird später mit Bezug auf die Figuren näher erläutert, welche dann ersichtlich machen, dass bildlich gesprochen, von links nach rechts ein erstes Benutzerzertifikat übermittelt wird und von rechts nach links ein anderes, zweites Benutzerzertifikat übermittelt wird.

Somit kann auch eine beidseitige Authentisierung zweier Endgeräte bzw. zweier Endbenutzer erfolgen. Wenn auch einzelne Schritte des vorgeschlagenen Verfahrens bekannt sein können, ermöglicht doch die Gesamtheit der Verfahrensschritte eine elegante und effiziente Datenkommunikation. Das erfindungsgemäße Verfahren macht sich dabei zunutze, dass neue Smartcards über gesteigerte Rechenkapazitäten verfügen.

Gemäß einem Aspekt der Erfindung wird das Verfahren wechselseitig auf beiden Seiten eines Kommunikationskanals zwischen dem mobilen Endgerät und dem weiteren mobilen Endgerät durchgeführt. Dies hat den Vorteil, dass auch eine wechselseitige Authentisierung möglich ist und die Datenkommunikation von dem mobilen Endgerät zu dem weiteren mobilen Endgerät auch in der Rückrichtung stattfinden kann. Insbesondere können auch das Registrieren und die Authentisierung des weiteren mobilen Endgeräts stattfinden. Somit wird das Verfahren symmetrisch ausgeführt, und beide mobilen Endgeräte kommunizieren mit der entsprechenden Zertifizierungsstelle.

Gemäß einem weiteren Aspekt der Erfindung wird zwischen den beiden Endgeräten ein gesicherter Kommunikationskanal mittels eines Diffie-Hellman-Verfahrens aufgebaut. Das Diffie-Hellman-Verfahren ist ein bekanntes Protokoll zur Schlüsselvereinbarung, das es den beteiligten Kommunikationspartnern ermöglicht, mittels des ermittelten Schlüssels eine Kommunikationsverbindung zu sichern. Der gesicherte Kommunikationskanal hat den Vorteil, dass bereits vorbereitende Verfahrensschritte über den Kommunikationskanal durchgeführt werden können und sodann das erfindungsgemäße Verfahren zum Absichern der Kommunikation Einsatz finden kann. Das eigentliche Aushandeln der Schlüssel im Diffie-Hellman-Verfahren erfolgt zwischen den beteiligten Endgeräten. Vorzugsweise erfolgt eine Überprüfung, dass die Schlüssel authentisch sind unter Verwendung der Sicherheitselemente, sodass jeder Partner sicher weiß, mit wem er kommuniziert.

Gemäß einem weiteren Aspekt der Erfindung umfasst das Registrieren des Benutzers ein Video-Identifikationsverfahren. Dies hat den Vorteil, dass sich der Benutzer vollautomatisch bei der Zertifizierungsstelle registrieren kann. In einer Variante legt der Benutzer einem Mitarbeiter der Zertifizierungsstelle über eine Audio- und Video-Verbindung seinen Ausweis vor.

Im Kontext der Erfindung ist die Zertifizierungsstelle ein Server. Die Zertifizierungsstelle kann auch als Zertifizierungseinheit ausgeführt sein, wobei das vorgeschlagene Verfahren komplett datentechnisch abgewickelt wird, ohne dass der Benutzer persönlich in einer Filiale vorstellig werden muss.

Zweckmäßig weist das Benutzerzertifikat eine zeitliche Gültigkeit auf. Dies hat den Vorteil, dass ein weiterer Sicherheitsmechanismus vorgesehen wird und das Verifizieren nur dann positiv verläuft, falls das Benutzerzertifikat also auch tatsächlich gültig ist. Hierzu kann eine Zeitspanne der Gültigkeit oder ein Ablaufdatum festgelegt werden.

Zweckmäßig wird das Benutzerzertifikat auf einem mobilen Endgerät und/oder auf einem Datenspeicher der Zertifizierungsstelle gespeichert. Dies hat den Vorteil, dass Kontrolle darüber besteht, wo die in dem Benutzerzertifikat enthaltenen persönlichen Daten des Benutzers wie Name, Anschrift, etc. abgelegt werden.

Gemäß einem weiteren Aspekt der Erfindung wird das Benutzerzertifikat von der Zertifizierungsstelle an das Endgerät übermittelt und anschließend von der Zertifizierungsstelle lokal gelöscht. Dies hat den Vorteil, dass sicherheitsrelevante Daten, welche nicht lediglich auf das Benutzerzertifikat beschränkt sind, sofort nach deren Verwendung gelöscht und somit ein unberechtigter Zugriff verhindert werden kann. Somit wird es unterbunden, dass ein Benutzerzertifikat von einem unberechtigten Benutzer ausgelesen und die in dem Benutzerzertifikat enthaltene persönliche Information missbraucht wird.

Gemäß einem weiteren Aspekt der Erfindung werden Schnittstellen vorgesehen, welche eine Datenkommunikation mit weiteren Authentisierungsverfahren ermöglichen. Dies hat den Vorteil, dass das vorgeschlagene Verfahren in bestehende Rahmenwerke eingebettet werden kann und insbesondere, dass Implementierungen dieser Rahmenwerke erfindungsgemäß genutzt werden können. Die Schnittstellen ermöglichen hierbei eine Datenkommunikation und können sich auch auf Nachrichtenformate beziehen, damit es möglich wird, dass die Nachrichten, welche zur Implementierung des vorgeschlagenen Verfahrens notwendig sind, auch von anderen Rahmenwerken gelesen bzw. interpretiert werden können.

Zweckmäßig wird das Endgerät als ein Mobiltelefon bereitgestellt, welches drahtlos mit der Smartcard kommuniziert. Dies hat den Vorteil, dass eine hohe Benutzerakzeptanz geschaffen wird, da der Benutzer sein Smartphone typischerweise mit sich führt und somit jederzeit die Kommunikation auch mobil absichern kann. Bevorzugt kann die Datenkommunikation mittels Nearfield durchgeführt werden, was jedoch nicht als einschränkend zu verstehen ist.

In einer Variante kann die Smartcard auch in elektronischer Form in Gestalt einer HCE (Host Card Emulation) realisiert sein. In weiteren Varianten liegt die Smartcard in anderen Formfaktoren vor, z.B. als eUICC (embedded UICC). In einer bevorzugten Ausführungsform liegt die Smartcard als EMV-Karte vor. EMV steht für Europay, Mastercard und VISA. Diese Karten haben bereits eine hohe Verbreitung im Markt. Die Nutzung von EMV-Karten hat den Vorteil, dass bekannte Verfahren zur Kommunikation mit solchen Karten wiederverwendet werden können, ohne dass sie adaptiert werden müssen. Eine Smartcard in Gestalt einer EMV-Karte wird also in einem neuem Kontext gebracht, in dem vorhandene, herkömmlichen EMV-Zertifikate gegenüber der Zertifizierungsstelle verwendet werden. Die Zertifizierungsstelle erstellt sodann ein erfindungsgemäß erzeugtes Benutzerzertifikat.

Die Aufgabe wird auch gelöst durch eine Kommunikationsanordnung zum Absichern einer Peer-to-Peer-Kommunikation zwischen zwei Endgeräten mittels Smartcards, gemäß dem Anspruch 14.

Die vorgeschlagenen Komponenten können weitere Komponenten aufweisen, welche beispielsweise die Netzwerkkommunikation übernehmen. Typischerweise liegt die Zertifizierungsstelle als ein Server vor, das Endgerät als ein Mobiltelefon und die Smartcard als eine EMV-Karte.

Die Aufgabe wird auch gelöst durch ein Computerprogrammprodukt mit Steuerbefehlen, welche das Verfahren implementieren bzw. die vorgeschlagene Kommunikationsanordnung betreiben.

Konkret soll im vorliegenden Fall die EMV-Karte zur gegenseitigen Authentisierung zweier Endnutzer genutzt werden, wobei die eigentliche Authentisierung mithilfe alternativer Benutzerzertifikate erfolgt und die auf der EMV-Karte hinterlegten EMV-Zertifikate gerade nicht verwendet werden. Komponenten des vorgeschlagenen Verfahrens sind zwei Handys, als technische Repräsentanten jeweils eines Nutzers, zwei EMV-Karten der Nutzer sowie jeweils eine Zertifizierungsstelle, welche für einen Nutzer jeweils ein Benutzerzertifikat ausstellen kann.

In der Grundvariante muss ein Nutzer sich mit seinen persönlichen Daten bei der Zertifizierungsstelle registrieren, z.B. über ein Video-Ident-Verfahren. Mit Video-Ident oder anderen geeigneten Verfahren weist der Benutzer seine Identität nach, d.h. es erfolgt eine Verifikation seiner persönlichen Daten, wie Name, Anschrift, etc.

Danach führt der Nutzer gegenüber der Zertifizierungsstelle eine normale EMV-Authentisierung durch, woraufhin die Zertifizierungsstelle ein Benutzerzertifikat über die persönlichen Daten des Nutzers sowie über den öffentlichen Schlüssel der EMV-Karte erzeugt. Für die Nutzung signiert jeweils die Karte eines Nutzers eine Challenge und das Endgerät fügt das zuvor erhaltene Nutzerzertifikat bei. Das Gegengerät kann mittels des öffentlichen Schlüssels der Zertifizierungsstelle das Benutzerzertifikat verifizieren und danach die signierte Challenge prüfen.

Erfindungsgemäß ist es besonders vorteilhaft, dass das Verfahren Schritte aufweist, welche funktionale Merkmale der Rechenanordnung beschreiben. Die Rechenanordnung kann strukturelle Merkmale aufweisen, welche funktional auch als Verfahrensschritte nachgebildet werden können.

Weitere vorteilhafte Ausgestaltungen werden anhand der beigefügten Figuren näher erläutert. Es zeigen:
- Fig. 1:: eine Kommunikationsanordnung zum Absichern einer Peer-to-Peer-Kommunikation;
- Fig. 2:: ein Registrieren des Endgeräts bzw. der EMV-Karte bei der Zertifizierungsstelle;
- Fig. 3:: eine direkte Peer-to-Peer-Authentifizierung;
- Fig. 4:: eine Registrierung der EMV-Karte bzw. des Endgeräts bei der Zertifizierungsstelle;
- Fig. 5:: einen Aspekt einer direkten Peer-to-Peer-Authentifizierung;
- Fig. 6:: eine indirekte Peer-to-Peer-Authentifizierung;
- Fig. 7:: eine Registrierung eines Benutzers mittels eines Passwortes;
- Fig. 8:: eine indirekte Peer-to-Peer-Authentifizierung mit einem abgeleiteten Schlüssel;
- Fig. 9:: ein Ablaufdiagramm zum Absichern einer Peer-to-Peer-Kommunikation; und
- Fig. 10:: einen weiteren Aspekt einer direkten Peer-to-Peer-Authentifizierung.

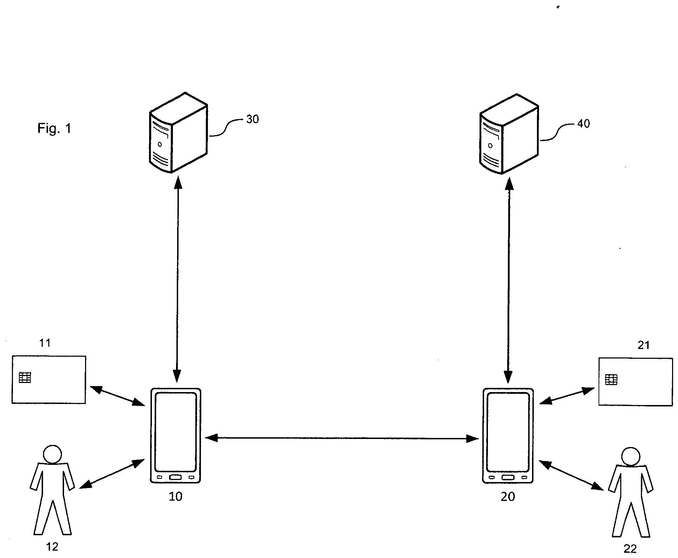

Fig. 1 zeigt eine Ausführungsform der Kommunikationsanordnung zum Absichern einer Peer-to-Peer-Kommunikation zwischen zwei Endgeräten 10, 20 mithilfe von Sicherheitselementen 11, 21, wobei vorliegend die Endgeräte 10, 20 als Mobiltelefone vorliegen und die Sicherheitselemente 11, 21 als Smartcards in Form von EMV-Karten. Wenigstens eine vertrauenswürdige Instanz 30, 40, für die fortfolgend die Ausführung als Zertifizierungsstelle zugrundegelegt wird, ist vorliegend durch einen Server gegeben.

Die Erfindung ist nicht auf die genannten Ausführungsformen beschränkt. Unter Sicherheitselement 11, 21 wird eine ressourcenbeschränkte Datenverarbeitungseinheit verstanden, die durch geringe Baugröße sowie besondere Software- und Hardware-Architektur besonders gegen Manipulation geschützt ist. Neben der Ausführung als Smartcard können Sicherheitselemente 11, 21 eine Reihe weiterer Bauformen besitzen, zum Beispiel die Gestalt eines eUICC (embedded UICC), oder körperlos ausgeführt sein, z.B. in Form einer HCE (Host Card Emulation). Ein Endgerät kann grundsätzlich jedes Gerät sein, das mit einem Sicherheitselement kommunizieren kann.

Zwei Kommunikationspartner 12, 22, die jeweils ein im folgenden auch Gerät genanntes Endgerät 10, 20 besitzen, sollen mittels dieser Geräte 10, 20 sicher miteinander kommunizieren können. Jeder der im folgenden Benutzer genannten Kommunikationspartner 12, 22 besitzt jeweils eine EMV-Karte 11, 21 und weist gemäß einem Aspekt der Erfindung mit dieser Karte 11, 21 direkt oder indirekt seine eigene Identität gegenüber dem anderen Benutzer 22,12 bzw. dessen Gerät 20,10 nach.

Der Nachweis der Identität umfasst beispielsweise die Übermittlung von Vor- und Nachname und/oder andere zu definierende Daten. Die beiden Benutzer 12, 22 kennen sich nicht notwendigerweise bereits vorher. Beide Benutzer 12, 22 vertrauen einer oder mehreren übergeordneten Instanz(en) 30, 40, die als Zertifizierungsstellen fungieren (Certification Authorities, CA).

Fig. 1 zeigt die beteiligten Systemkomponenten und ihre Verbindungen. Unter Kommunikation wird gemäß einem Aspekt der Erfindung die Übertragung von Sprache (Telefonie), Bildern, Nachrichten (Messaging, Chats) etc. verstanden. Sichere Kommunikation bedeutet insbesondere der Schutz von Authentizität, Integrität und Vertraulichkeit der übertragenen Daten.

Für die Authentisierung sollen Kartendaten benutzt werden, insbesondere Kartendaten von EMV-Karten. Kartendaten sind Daten, die die Karte, z.B. eine als EMV-Karte arbeitende Smartcard, identifizieren oder irgendwie sonst mit der Karte in Zusammenhang stehen, insbesondere die Kartennummer (PAN = Primary Account Number) und das Kartenverfallsdatum. Die Kartendaten sind typischerweise im Chip und, falls vorhanden, auf dem Magnetstreifen gespeichert sowie auf dem Kartenkörper aufgedruckt oder hochgeprägt.

Sind die eingesetzten Sicherheitselemente 11, 21 Smartcards in Form von EMV-Karten, tragen sie Kartenzertifikate. Mit den Kartenzertifikaten bestätigen die Kartenorganisationen, z.B. Visa oder Mastercard, und die ausgebenden Banken die Korrektheit der Kartendaten, insbesondere den Zusammenhang zwischen Kartenidentifikationsdaten und kartenspezifischen Schlüsseln. Die Zertifikate und die kartenspezifischen Schlüssel sind standardmäßig im Chip gespeichert.

Bei der Nutzung der Kartendaten für die Authentisierung soll vermieden werden, dass ein Kommunikationspartner Daten von der Karte des anderen Kommunikationspartners bekommt, die für Bezahltransaktionen verwendet werden könnten, insbesondere die Kartennummer (PAN) und das Verfallsdatum der Karte.

Anders als die Benutzer 12, 22 sind die übergeordneten Instanzen (CAs) uneingeschränkt vertrauenswürdig, so dass diesen auch für Bezahltransaktionen geeignete Kartendaten übermittelt werden können.

Für die sichere Kommunikation wird zwischen den zwei Geräten 10, 20 gemäß einem Aspekt der Erfindung mittels eines Diffie-Hellman Key Exchange-Verfahrens (DH auf Basis der diskreten Exponentialfunktion oder ECDH auf Basis von Elliptischen Kurven) für die Dauer einer Kommunikation ein gemeinsames Geheimnis in Form eines symmetrischen Sitzungsschlüssels (Session Key, SK) vereinbart. Mittels (EC)DH wird ein abhör- und manipulationssicherer Kanal hergestellt. Dies erfolgt anonym, die beiden Benutzer 12, 22 kennen gegenseitig ihre Identität noch nicht. Ein sogenannter Man in the Middle-Angreifer könnte mit dem ersten Benutzer 12 und mit dem zweiten Benutzer 22 jeweils eine Verbindung aufbauen. Wenn sich Benutzer 12 und Benutzer 22 gegenseitig authentisieren und dabei verifizieren, dass beide den gleichen Sitzungsschlüssel SK verwenden, wird ein Man in the Middle -Angriff aber verhindert.

Im einfachsten Fall authentisiert sich ein Benutzer 12, 22 mittels einer EMV-Karte 11, 21 durch das Signieren einer Challenge. Damit die Gegenstelle die Identität des jeweils anderen Benutzers prüfen kann, benötigt sie jeweils eine vertrauenswürdige Information, welche die Verbindung der Benutzeridentität mit dem Public Key der EMV-Karte nachweist. Die auf den EMV-Karten 11, 21 vorhandenen Kartenzertifikate können dazu nicht verwendet werden, weil sie zwar Kartendaten wie die PAN, aber nicht die geforderte Benutzeridentität (Vor-, Nachname etc.) enthalten. Aus diesem Grund werden alternative Benutzerzertifikate (UserCert1, UserCert2) verwendet., Sie werden durch vertrauenswürdige Instanzen (CA) erstellt und nachfolgend als Benutzerzertifikate bezeichnet. In die Signatur über die Challenge fließt auch der vereinbarte Sitzungsschlüssel SK ein; dies erfolgt so, dass der Kommunikationspartner, der die Signatur empfängt und den SK kennt, die Signatur auch überprüfen kann, dass aber aus der Signatur der SK nicht ermittelt werden kann.

Die Benutzerzertifikate werden von Zertifizierungsstellen 30, 40 erzeugt, die im folgenden auch kurz als CA bezeichnet werden. Sie bestätigen die Korrektheit der Benutzerdaten in Verbindung mit den Schlüsseln, mittels derer ein Benutzer sich gegenüber seinem Kommunikationspartner authentisiert. Je nach Variante sind dies unterschiedliche Schlüssel: Schlüssel der EMV-Karte 11, 21 bei der direkten Variante und Schlüssel der Zertifizierungsstelle 30, 40 bei der indirekten Variante.

Um von einer CA 30, 40 ein Benutzerzertifikat zu erhalten, muss sich der Benutzer 12, 22 gemäß einem Aspekt der vorliegenden Erfindung mit seinen persönlichen Benutzerdaten vorab bei der CA 30, 40 registrieren. Benutzerdaten sind Daten, die den Benutzer identifizieren oder mit ihm in eindeutigem Zusammenhang stehen, etwa Name, Adresse, Geburtsdatum. Die Benutzerdaten sind beispielsweise auf seinem Personalausweis aufgedruckt bzw. darin gespeichert. Die Identifikation des Benutzers und die Feststellung der Benutzerdaten kann z.B. per Video-Ident erfolgen.

Weiterhin muss der Benutzer bei der Registrierung den tatsächlichen Besitz des Sicherheitselementes 11, 21 nachweisen. Ist das Sicherheitselement 11, 21 eine EMV-Karte, kann dies durch eine übliche EMV-Authentisierung unter Verwendung der Kartendaten und der bereitgestellten asymmetrischen kryptografischen Funktionen unter Verwendung der Kartenzertifikate geschehen. Im Zuge der Authentisierung werden die Kartenzertifikate an die Zertifizierungsstelle übertragen und von dieser geprüft. Der Besitznachweis muss so erfolgen, dass sich die CA 30, 40 sicher ist, dass dieser Benutzer 12, 22 das Sicherheitselement 11, 21 tatsächlich besitzt.

Bei der Absicherung der Peer-to-Peer-Kommunikation mithilfe von EMV-Karten können zwei grundsätzliche Varianten unterschieden werden:
Grundvariante A - direkte Authentisierung: Die Signatur der EMV-Karte 11, 21 des einen Benutzers 12, 22 wird direkt vom Gerät 20, 10 des anderen Benutzers 22, 12 geprüft. Ein Benutzerzertifikat der CA 30, 40 bestätigt dabei die Verbindung des öffentlichen Schlüssels der EMV-Karte 11, 21 und Benutzerdaten des ersten Benutzers 12, 22.
Grundvariante B - indirekte Authentisierung: Die Signatur der EMV-Karte 11, 21 des einen Benutzers 12, 22 wird nur durch die CA 30, 40 geprüft. Die CA 30, 40 erstellt eine Signatur zur Authentisierung des einen Benutzers 12, 22, welche vom Gerät 20,10 des anderen Benutzers 22, 12 geprüft wird.

Nachfolgend werden die Varianten anhand möglicher Aspekte näher beschrieben.

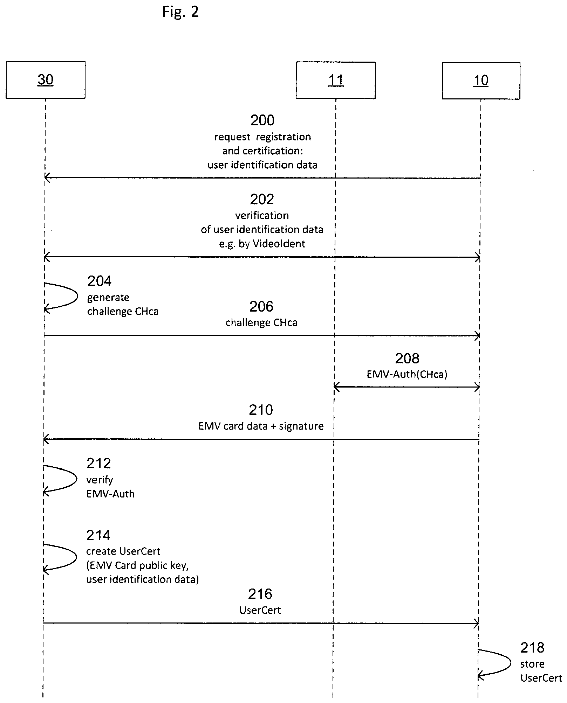

Fig. 2 zeigt einen ersten Teil eines ersten Aspektes A/1, der sich auf die Registrierung eines Benutzers 12, 22 bei einer Zertifizierungsstelle 30, 40 bezieht. Die Registrierung erfolgt ohne Passwort.

Ein Benutzer 12, 22 registriert sich mithilfe seines Geräts 10, 20 mit seinen persönlichen Daten und der EMV-Karte 11, 21 bei seiner CA 30,40. Nach einer erfolgreichen Überprüfung durch die CA 30, 40 erstellt diese ein Benutzerzertifikat UserCert, Schritt 214, über die persönlichen Daten des Benutzers 12, 22 und den öffentlichen Schlüssel der EMV-Karte 11, 21. Das Benutzerzertifikat ist für eine direkte Authentisierung gegenüber einem anderen Benutzer 12, 22 geeignet. Es ist über einen längeren Zeitraum gültig. Das Benutzerzertifikat wird auf dem Gerät 10, 20 des Benutzers 12, 22 gespeichert, typischerweise bis zum Ende des Gültigkeitszeitraums.

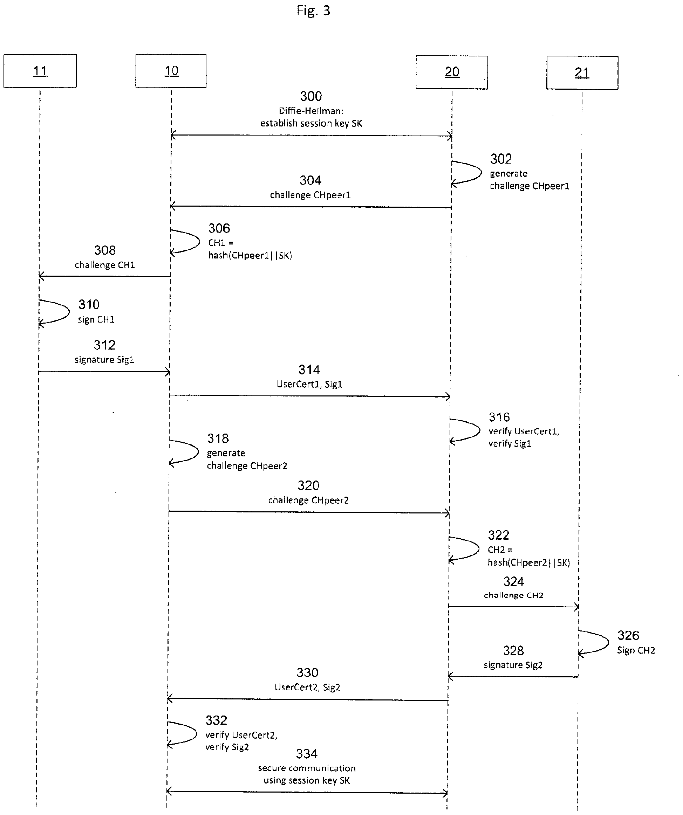

Fig. 3 zeigt als zweiten Teil von Aspekt A/1 eine direkte Peer-to-Peer (P2P)-Authentisierung zwischen zwei Benutzern 12, 22, die sich beide bei einer CA 30, 40 registriert haben, wie anhand von Fig. 2 beschrieben. Es ist möglich, dass sich beide Benutzer 12, 22 bei derselben CA 30, 40 registriert haben. Beim Aufbau einer sicheren P2P-Kommunikation authentisiert sich der Benutzer 12, 22 gegenüber einem anderen Benutzer 22,12, indem er einen Hashwert über eine Challenge der Gegenseite und den Sitzungsschlüssel SK mit seiner EMV-Karte 11, 21 signiert, Schritt 310. Dieser Signatur fügt er das auf dem Gerät 10, 20 gespeicherte Benutzerzertifikat UserCert hinzu. Signatur und Benutzerzertifikat übermittelt er der Gegenseite, d.h. dem anderen Gerät 20, 10 zur Verifikation, Schritt 314.

Bei der in den Fig. 2 und 3 gezeigten Variante muss das Gerät 10, 20 beim Aufbau der Kommunikation mit dem anderen Gerät 20, 10 nicht mehr mit der CA 30, 40 kommunizieren, da das Benutzerzertifikat auf dem Gerät 10, 20 gespeichert ist.. Die CA 30, 40 muss nur während der Ausstellung des Benutzerzertifikats die Daten des Benutzers 12, 22 und der EMV-Karte 11, 21 verarbeiten. Es muss diese aber nicht dauerhaft in einer Datenbank abspeichern.

Allerdings ist zum Nachweis des Besitzes neben der Benutzung der EMV-Karte 11, 21 kein zweiter Faktor, z. B. das Wissen einer PIN oder eines Paßwortes beteiligt. Da das Benutzerzertifikat UserCert auf dem Gerät 10, 20 gespeichert ist, muss der Benutzer 12, 22 stets dasselbe Gerät 10, 20 verwenden oder das Benutzerzertifikat auf andere Geräte kopieren.

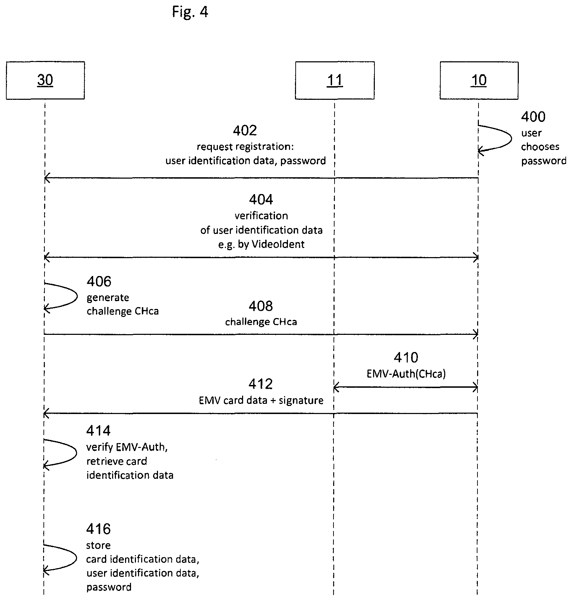

Fig. 4 zeigt einen weiteren Aspekt, der sich auf die Registrierung eines Benutzers 12, 22 bei einer Zertifizierungsstelle 30, 40 unter Verwendung eines Passwortes bezieht und sich für die Aspekte A/2, A/3, B/1 eignet. Die Registrierung erfolgt ohne sofortige Erstellung eines Benutzerzertifikates.

Ein Benutzer 12, 22 registriert sich mit seinen persönlichen Benutzerdaten, einem selbst gewählten Passwort, Schritt 400, und der EMV-Karte 11, 21 bei seiner CA 30, 40. Nach einer erfolgreichen Überprüfung durch die CA 30, 40 speichert diese die Daten in einer Benutzerdatenbank. Zu diesem Zeitpunkt stellt die CA 30, 40 noch kein Benutzerzertifikat aus.

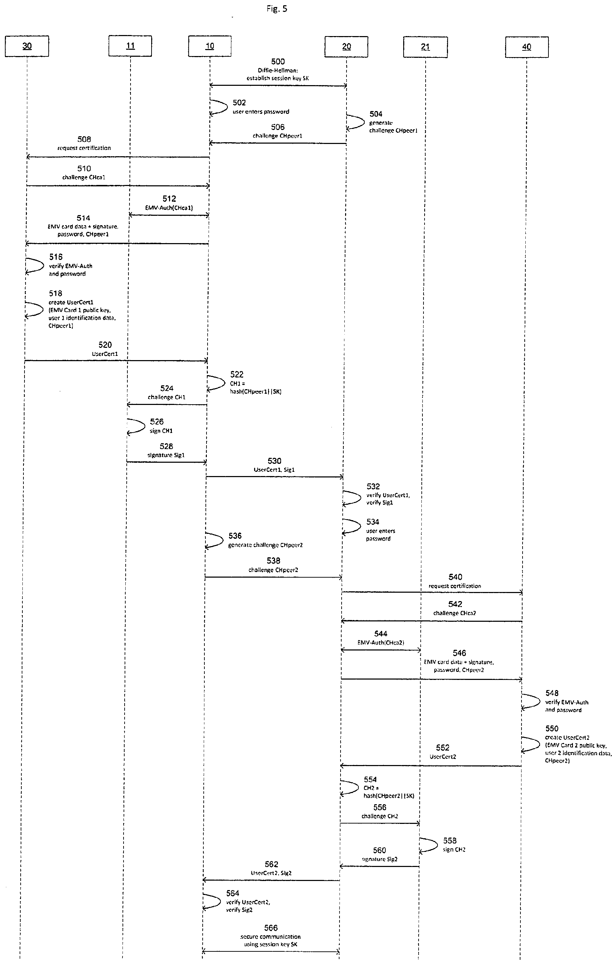

Fig. 5 zeigt eine direkte P2P-Authentisierung gemäß einem Aspekt A/2 zwischen zwei Benutzern 12, 22 unter Verwendung eines Passwortes. Die Benutzer 12, 22 haben sich jeweils bei einer gemeinsamen oder zwei verschiedenen CA 30, 40 registriert, wie in Fig. 4 dargestellt. Das Benutzerzertifikat wird erst im Laufe der Authentisierung ausgestellt.

Beim Aufbau einer sicheren P2P-Kommunikation fordert das Gerät 10, 20 von der CA 30, 40 ein neu ausgestelltes Benutzerzertifikat an. Dazu authentisiert sich der Benutzer 12, 22 mit seiner EMV-Karte 11, 21 und seinem Passwort gegenüber der CA 30, 40. Nach erfolgreicher Verifikation einer Zweifaktor-Authentisierung mithilfe der Benutzerdatenbank stellt die CA 30, 40 ein neues Benutzerzertifikat UserCert aus, Schritt 518. Mit diesem Benutzerzertifikat bestätigt die CA 30, 40 nicht nur die Korrektheit der Nutzerdaten (Vor- und Nachname etc.) und des öffentlichen Schlüssels der EMV-Karte 11, 21, sondern schließt zusätzlich die Challenge CHpeer des P2P-Benutzers 22, 12 mit ein. Damit bestätigt die CA 30, 40 gegenüber dem P2P-Kommunikationspartner 22, 12, dass das Benutzerzertifikat speziell für diese P2P-Authentisierung ausgestellt ist.

Die weitere Authentisierung des Benutzers 12, 22 gegenüber dem P2P-Kommunikationspartner 22, 12 erfolgt analog zu Variante A/1.

Bei der in Fig. 5 gezeigten Variante wird eine Zweifaktor-Authentisierung des Benutzers 12, 22 unterstützt. Das Benutzerzertifikat UserCert muss nicht auf dem Gerät 10, 20 gespeichert werden. Das Gerät 10, 20 muss nur wissen, zu welcher CA 30, 40 es sich verbinden muss. Damit ist es für den Benutzer 12, 22 leichter, mehrere Geräte zu verwenden.

Allerdings muss sich ein Gerät 10, 20 jedes Mal wenn es mit einem anderen Gerät 20, 10 eine Kommunikation aufbauen will, von der CA 30, 40 ein Benutzerzertifikat ausstellen lassen. Die CA 30, 40 benötigt eine Datenbank für die dauerhafte Speicherung der Benutzerdaten, eine höhere Rechenleistung, eine höhere Verfügbarkeit. Außerdem erfährt die CA 30, 40, welcher Benutzer 12, 22 wann und wie oft kommuniziert. Mit der EMV-Karte 11, 21 werden zwei Authentisierungen durchgeführt, nämlich eine gegenüber der CA 30, 40 und eine gegenüber dem anderen Benutzer 22, 12. Eine NFC-Karte 11, 21 muss dazu länger im Feld gehalten werden. Bei manchen Karten (z.B. Visa qVSDC) wird der Application Transaction Counter (ATC, 2 byte) auf der EMV-Karte jedes Mal um 2 weitergezählt. Infolge der größeren Anzahl von Authentisierungen "verbraucht" sich die Karte schneller.

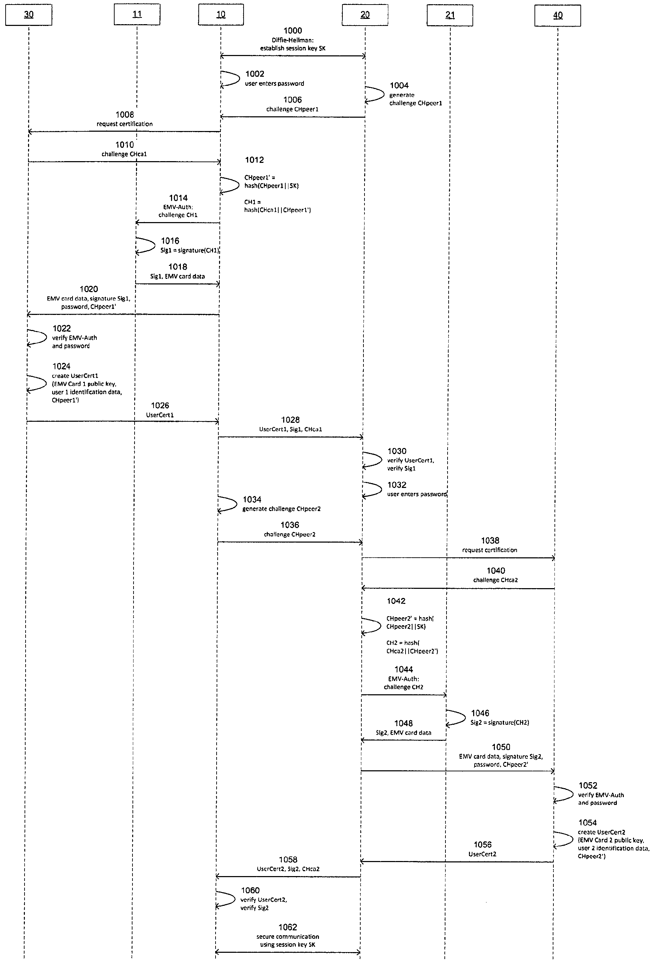

Fig. 10 zeigt eine Variante A/3, die eine Modifikation von Variante A/2 ist, bei der die EMV-Karte 11, 21 für eine P2P-Authentisierung nur eine Signatur rechnen muss. Der Input zu dieser Signatur umfasst beide Challenges (CHpeer vom P2P-Kommunikationspartner und CHca von der CA) und den Sitzungsschlüssel SK. Damit die CA 30, 40 und der P2P-Kommunikationspartner die Signatur verifizieren können, müssen sie die jeweils unbekannte Challenge vom Gerät 10, 20 übermittelt bekommen. Damit der Sitzungsschlüssel SK der CA nicht offen gelegt werden muss, geht er nicht direkt in die Signatur ein sondern nur ein Hashwert über den SK und die Challenge CHpeer. Somit kann die Challenge CH, welche von der EMV-Karte signiert wird, wie folgt definiert werden:
CHpeer' = hash(CHpeer ∥ SK)
CH = hash(CHca ∥ CHpeer')

Bei der in Fig. 10 gezeigten Variante muss die EMV-Karte 11, 21 in vorteilhafter Weise nur eine Signatur rechnen. Es ergeben sich keine Einschränkungen gegenüber Variante A/2.

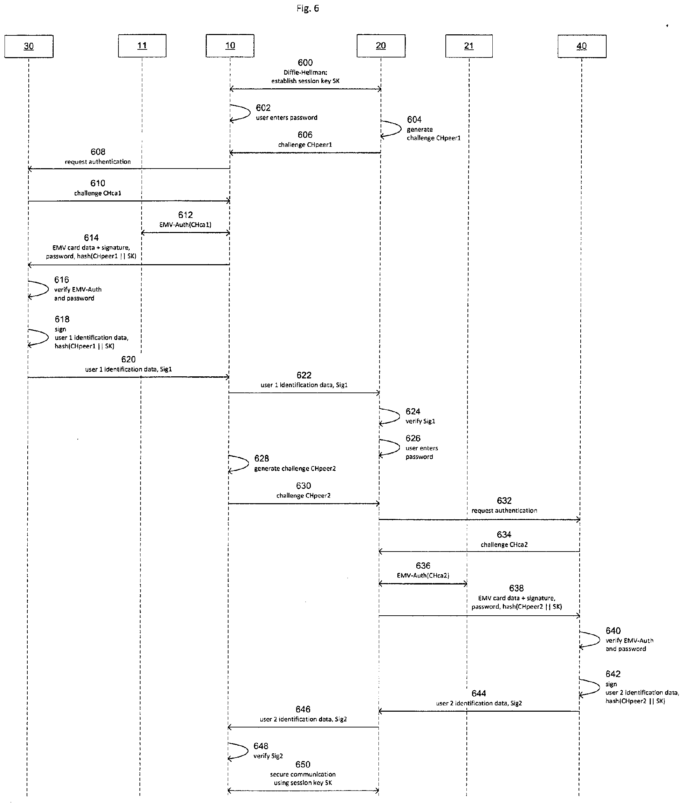

Fig. 6 zeigt einen weiteren Aspekt B/1, der eine indirekte P2P-Authentisierung zwischen zwei Benutzern 12, 22 betrifft. Die Registrierung der Benutzer 12, 22 erfolgt wie anhand von Fig. 4 dargestellt.

Ein Benutzer 12, 22 registriert sich mit seinen persönlichen Daten, einem selbst gewählten Passwort und der EMV-Karte 11, 21 bei seiner CA 30, 40, Schritt 402. Nach einer erfolgreichen Überprüfung durch die CA 30, 40, Schritt 404, speichert diese die Daten in einer User-Datenbank. Zu diesem Zeitpunkt stellt die CA 30, 40 noch keine Signatur aus.

Beim Aufbau einer sicheren P2P-Kommunikation fordert das Gerät 10, 20 von der CA 30, 40 eine Authentisierungssignatur an. Dazu authentisiert sich der Benutzer 12, 22 mit seiner EMV-Karte 11, 21 und seinem Passwort gegenüber der CA 30, 40, Schritte 602, 608, 610, 612, 614. Nach erfolgreicher Verifikation der Zweifaktor-Authentisierung mithilfe der -Benutzerdatenbank erstellt die CA 30, 40 die Authentisierungssignatur über die Benutzerdaten (Vor- und Nachname etc.) und den Hashwert über die Challenge CHpeer und den Sitzungsschlüssel SK. Damit bestätigt die CA 30, 40 die Identität des Benutzers 12, 22 gegenüber dem P2P-Kommunikationspartner 22, 12 für diese Sitzung. Diese Signatur wird vom Gerät 10, 20 an den P2P- Benutzer 22, 12 zur Verifikation weitergeleitet.

Auch wenn die EMV-Karte 11, 21 nur das Signieren einer 4 Byte langen Unpredictable Number (CHca) unterstützt, kann eine längere CHpeer bei der Authentisierungssignatur durch die CA 30, 40 voll berücksichtigt werden.

Die in Fig. 6 gezeigte Variante unterstützt eine Zweifaktor-Authentisierung des Kommunikationspartners. Es muss kein Benutzerzertifikat UserCert auf dem Gerät gespeichert werden. Das Gerät 10, 20 muss nur wissen, zu welcher CA 30, 40 es sich verbinden muss. Damit ist es für den Benutzer 12, 22 leichter, mehrere Geräte zu verwenden.

Allerdings muss ein Gerät jedes Mal, wenn es mit einem anderen Gerät 20,10 eine Kommunikation aufbauen will, sich von der CA 30, 40 eine Signatur erstellen lassen. Die CA 30, 40 benötigt eine Datenbank für die dauerhafte Speicherung der Benutzerdaten, eine höhere Rechenleistung, eine höhere Verfügbarkeit. Außerdem erfährt die CA 30, 40, welcher Benutzer 12, 22 wann und wie oft kommuniziert.

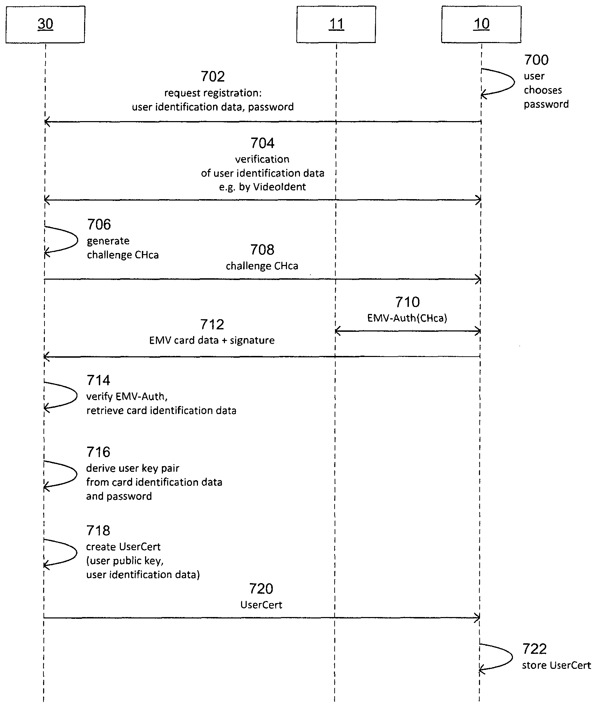

Fig. 7 zeigt einen Aspekt B/2, der sich auf eine Registrierung eines Benutzers 12, 22 mittels eines Passwortes richtet und auf der Bildung eines Schlüsselpaares beruht.

Ein Benutzer 12, 22 registriert sich mit seinen persönlichen Daten, einem selbst gewählten Passwort, Schritt 700, und der EMV-Karte 11, 21 bei seiner CA 30, 40, z. B. einem Token Server, Schritt 702, 704, 712. Nach einer erfolgreichen Überprüfung, Schritt 714, durch die CA 30, 40 leitet diese aus den Kartendaten und dem Passwort mithilfe eines Masterschlüssels, der nur der CA 30, 40 bekannt ist, ein Schlüsselpaar ab, Schritt 716. Die CA30, 40 erstellt ein Benutzerzertifikat UserCert über die persönlichen Daten des Benutzers 12, 22 und den öffentlichen Schlüssel des abgeleiteten Schlüsselpaars, Schritt 718. Das Benutzerzertifikat ist über einen längeren Zeitraum gültig. Das Benutzerzertifikat wird an das Gerät 10, 20 geschickt, Schritt 720, und von diesem gespeichert, Schritt 722. Die CA 30, 40 verwirft das Benutzerzertifikat und das abgeleitete Schlüsselpaar.

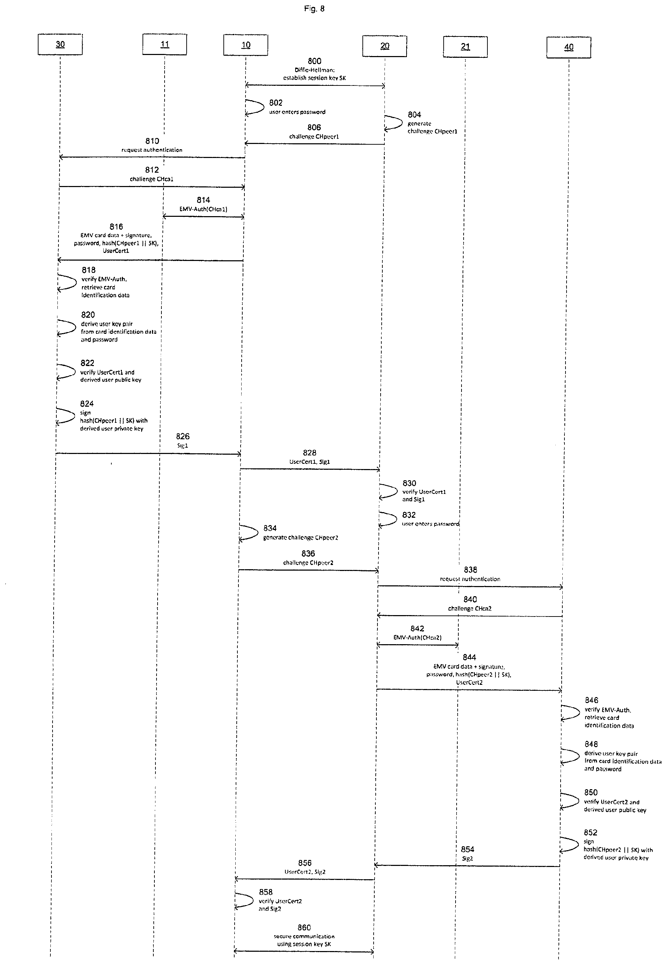

Fig. 8 zeigt eine indirekte P2P-Authentisierung gemäß einem Aspekt B/2 zwischen zwei Benutzern 12, 22 mithilfe eines Passwortes unter Bildung eines abgeleiteten Schlüssels, wobei ein Benutzerzertifikat auf dem Gerät 10, 20 gespeichert ist. Die Registrierung der Benutzer 12, 22 erfolgt wie anhand von Fig. 7 dargestellt.

Beim Aufbau einer sicheren P2P-Kommunikation fordert das Gerät 10, 20 von der CA 30, 40 eine Authentisierungssignatur an, Schritt 810. Dazu authentisiert sich der Benutzer 12, 22 mit seiner EMV-Karte 11, 21 gegenüber der CA 30, 40. Das Gerät 10, 20 schickt, Schritt 816, auch alle weiteren benötigten Daten an die CA 30, 40: das Passwort, das Benutzerzertifikat UserCert, den Hashwert über die Challenge CHpeer des Benutzers 22, 12 und den Sitzungsschlüssel SK.

Nach erfolgreicher Verifikation der EMV-Authentisierung leitet die CA 30, 40 aus den Kartendaten und dem Passwort mithilfe des CA-Master-Schlüssels ein Schlüsselpaar ab, Schritt 820; bei korrekten Daten ergibt sich das gleiche Schlüsselpaar wie bei der Registrierung, Schritt 716. Die CA 30, 40 verifiziert, dass der öffentliche Schlüssel des abgeleiteten Schlüsselpaars zum Benutzerzertifikat UserCert passt, Schritt 822.

Nach erfolgreicher Verifikation erstellt die CA 30, 40 mit dem privaten Schlüssel des abgeleiteten Schlüsselpaars die Authentisierungssignatur über den Hashwert der Challenge CHpeer und des Sitzungsschlüssels SK, Schritt 824. Die CA 30, 40 schickt die Signatur Sig an das Gerät 10, 20, Schritt 826. Das Gerät 10, 20 leitet diese Signatur zusammen mit dem Benutzerzertifikat UserCert an das Gerät 20, 10 des P2P-Kommunikationspartners 22, 12 zur Verifikation weiter, Schritt 828.

Bei der in Fig. 8 gezeigten Variante erfolgt immer eine Zweifaktor-Authentisierung. Es muss kein privater Schlüssel auf dem Gerät oder der CA gespeichert werden.

Da das Benutzerzertifikat UserCert auf dem Gerät 10, 20 gespeichert ist, muss ein Benutzer 12, 22 allerdings stets dasselbe Gerät 10, 20 verwenden oder das Benutzerzertifikat auf andere Geräte kopieren. Die CA 30, 40 erfährt, wann und wie oft ein Benutzer 12, 22 kommuniziert, sie ist bei jedem Sitzungsaufbau erforderlich und benötigt eine entsprechende Rechenleistung und Verfügbarkeit.

In einer Variante B/3, die eine Modifikation von Variante B/2 ist, wird das Benutzerzertifikat UserCert im Rahmen der Registrierung nicht auf dem Gerät 10, 20 sondern in einer Datenbank der CA (Token Server) gespeichert.

Beim Aufbau der P2P-Kommunikation leitet die CA 30, 40 aus den EMV-Kartendaten und dem Passwort wie in Variante B/2 mithilfe eines Masterschlüssels, der nur der CA 30, 40 bekannt ist, das Schlüsselpaar ab und kann mit dem öffentlichen Schlüssel das zugehörige Benutzerzertifikat in der Datenbank finden. Gegenüber der Variante B/2 hat dies den Vorteil, dass kein Benutzerzertifikat UserCert auf dem Gerät 10, 20 gespeichert werden muss. Das Gerät 10, 20 muss nur wissen, zu welcher CA 30, 40 es sich verbinden muss. Damit ist es für einen Benutzer 12, 22 leichter, mehrere Geräte zu verwenden. Allerdings benötigt die CA eine Datenbank für die Speicherung der Benutzerzertifikate.

Es kann generell eine oder auch mehrere Zertifizierungsstellen geben. Jede CA besitzt mindestens ein CA Root Key Pair. Ein Benutzer 12, 22 kann wählen, von welcher CA 30, 40 er sich zertifizieren lässt. Die Geräte 10, 20 enthalten die CA Root Public Keys aller CAs zur Überprüfung der User Certificates, z.B. innerhalb eines Key Stores der Kommunikations-App, diese sind gegen Manipulation geschützt. Zwei Benutzer 12, 22, die miteinander kommunizieren wollen, können von derselben CA 30, 40 oder von unterschiedlichen CAs 30, 40 zertifiziert sein.

In den Sequenzdiagrammen sind die Authentisierung des Benutzers 12 mit dem Gerät 10 gegenüber dem Benutzer 22 mit dem Gerät 20 und die entgegengerichtete Authentisierung des Benutzers 22 mit dem Gerät 20 gegenüber dem Benutzer 12 mit dem Gerät 10 aus Gründen der Übersichtlichkeit nacheinander dargestellt. Für einen schnelleren Ablauf können die beiden Authentisierungen auch parallel durchgeführt werden.

Es wäre auch denkbar, dass nur ein Benutzer 12, 22 von einer CA 30, 40 zertifiziert ist. Auch in diesem Fall kann eine gewisse Sicherheit erreicht werden, wenn sich beide Benutzer 12, 22 bereits vorher kennen. Wenn sich der Benutzer 12 gegenüber dem Benutzer 22 mittels Benutzerzertifikat authentisiert, kann anschließend Benutzer 22 seine Identität innerhalb der anschließenden Kommunikation glaubhaft machen. Er kann dabei sicher sein, dass er geäußerte Informationen nicht einem Angreifer mitteilt.

In allen vorgestellten Varianten wird vom Benutzer 12, 22 eine Challenge CHpeer bereitgestellt, die zusätzlich zum Sitzungsschlüssel SK in die Authentisierungssignatur eingeht. In manchen Fällen ist diese Challenge aus Sicherheitsgründen notwendig, in manchen Fällen kann auf sie verzichtet werden, was das Verfahren vereinfacht.

Ob die Einbeziehung der Challenge CHpeer notwendig ist, hängt von der Variante des Verfahrens und vom Typ der EMV-Karte 11, 21 ab. Zur Erläuterung wird der Fall betrachtet, dass nicht der berechtigte Benutzer 12, 22 mit einer echten EMV-Karte 11, 21 sich gegenüber einem Benutzer 22,12 authentisieren will, sondern ein Angreifer, der statt der EMV-Karte 11, 21 nur mehrere bereits berechnete Signaturen zu mehreren möglichen Challenges CH besitzt. Zusätzlich wird angenommen, dass es sich um einen Typ von EMV-Karte 11, 21 handelt, bei dem nur eine 4 Byte lange nicht vorhersagbare Zahl, eine Unpredictable Number, als Challenge CH in die Signaturberechnung eingeht.

Ohne Challenge CHpeer wäre nun folgender Angriff möglich: Im Rahmen des Diffie-Hellman-Schlüsselaustauschs erzeugen beide Seiten ein Schlüsselpaar aus privatem und öffentlichem Schlüssel, und übermitteln ihren öffentlichen Schlüssel an die jeweils andere Seite. Wenn nun der Angreifer von der Gegenseite bereits deren öffentlichen Schlüssel erhalten hat, kann er solange eigene Schlüsselpaare generieren, bis sich ein Session Key SK ergibt, zu dem der Angreifer eine passende Authentisierungssignatur besitzt. Je nach Anzahl der vorliegenden Signaturen, Rechenleistung des Angreifers und Länge der Challenge CH kann ein solcher Angriff schnell durchgeführt werden. Ein solcher Angriff kann dadurch abgewehrt werden, dass neben dem Session Key SK auch eine Challenge CHpeer zur Berechnung der Challenge CH verwendet wird, und die Gegenseite die Challenge CHpeer erst erzeugt, nachdem der Session Key SK bereits feststeht.

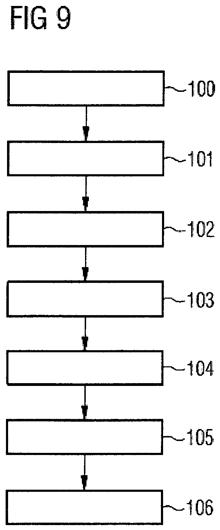

Fig. 9 zeigt ein Ablaufdiagramm des vorgeschlagenen Verfahrens zum Absichern einer Peer-to-Peer-Kommunikation zwischen zwei Endgeräten 10, 20 mittels Smartcards 11, 21, umfassend ein Registrieren 100 eines Benutzers 12, 22 bei einer Zertifizierungsstelle 30, 40 mittels einer Smartcard 11, 21 und einem mobilen Endgerät 10, 20, eine Authentisierung 101 des Benutzers bei der Zertifizierungsstelle 30, 40 anhand persönlicher Benutzerdaten, ein Erzeugen 102 eines Benutzerzertifikats durch die Zertifizierungsstelle 30, 40 unter Verwendung der persönlichen Benutzerdaten sowie unter Verwendung eines öffentlichen Schlüssels, welcher auf der Smartcard 11, 21 hinterlegt ist, ein Signieren einer Anfragenachricht durch die Smartcard 11, 21 und Anfügen des erzeugten 102 Benutzerzertifikats an die signierte Anfragenachricht durch das Endgerät 10, 20 zur Erstellung einer Prüfinformation und ein Übermitteln der Prüfinformation an ein weiteres mobiles Endgerät, welches anhand des öffentlichen Schlüssels die Prüfinformation verifiziert.

Gegenüber dem Stand der Technik schafft die vorliegende Erfindung folgende Vorteile:
Bereits herausgegebene und personalisierte EMV-Karten 11, 21 können als Sicherheitstoken für die Authentisierung verwendet werden, ohne dass die Karten 11, 21 dazu originär befähigt wären.

Eine Modifizierung der Karten 11, 21 ist nicht erforderlich (keine zusätzlichen Applets, keine Änderung des Kartenbetriebssystems, kein größerer Speicherbedarf, keine Verteuerung der Karten).

Der Endbenutzer 12, 22 muss keinen zusätzlichen Token bei sich tragen, der Herausgeber muss keine neuen Token herausgeben. Eine Kartenbasis von > 1 Mrd. herausgegebenen Karten steht unmittelbar als Sicherheitstoken zur Verfügung.

Gegenüber den Softwareverfahren ergibt sich eine deutlich höhere Sicherheit, da die privaten Authentisierungsschlüssel an ein Hardware-Sicherheitselement (EMV-Karte) gebunden sind. In Verbindung mit PIN/Password ergibt sich ein echtes Zweifaktorverfahren mit der kryptographischen Sicherheit der Karte 11, 21. Es muss kein privater Schlüssel auf einem potentiell unsicheren Kundengerät gespeichert werden.

Im Fall der Varianten A/1 und B/2 muss die beteiligte CA 30, 40 (Token Server) keine nutzerspezifischen Daten speichern. Dynamisch abgeleitete Schlüssel werden unmittelbar nach der Authentisierung verworfen. Somit entstehen keine Datenbanken mit Nutzerdaten, die potentiell angegriffen werden könnten.

## Patentansprüche

1. Verfahren zum Absichern einer Peer-to-Peer-Kommunikation zwischen zwei Endgeräten (10, 20) mittels Sicherheitselementen, umfassend:
- Registrieren (100) eines Benutzers (12, 22) bei einer Zertifizierungsstelle (30, 40) durch Verknüpfung der Nachweise des Besitzes eines Sicherheitselementes (11, 21) und der Identität des Benutzers (12, 22), wobei der Nachweis der Identität anhand persönlicher Benutzerdaten erfolgt und der Nachweis des Besitzes anhand von Kartenzertifikaten, die den Zusammenhang zwischen Identifikationsdaten des Sicherheitselementes (11, 12) und auf dem Sicherheitselement (11, 12) gespeicherten Schlüsseln nachweisen und von der Zertifizierungsstelle (30, 40) geprüft werden;
- Erzeugen (102) eines Benutzerzertifikats durch die Zertifizierungsstelle (30, 40) über die persönlichen Benutzerdaten sowie über einen auf dem Sicherheitselement (11, 12) gespeicherten öffentlichen Schlüssel des Benutzers oder über einen von der Zertifizierungsstelle (30, 40) nach Authentisierung des Benutzers (12, 22) zur Verfügung gestellten öffentlichen Schlüssel;
- Signieren (103) einer Anfragenachricht durch das Sicherheitselement (11, 21) unter Verwendung eines dem öffentlichen Schlüssel des Benutzers entsprechenden geheimen Schlüssels oder durch die Zertifizierungsstelle (30, 40) unter Verwendung eines durch Zertifizierungsstelle (30, 40) zur Verfügung gestellten geheimem Schlüssels;
- Anfügen (104) des erzeugten (102) Benutzerzertifikats an die signierte Anfragenachricht durch das Endgerät (10, 20) oder die Zertifizierungsstelle (30, 40) zur Erstellung einer Prüfinformation; und
- Übermitteln (105) der Prüfinformation an ein weiteres Endgerät (20, 10), welches mithilfe des öffentlichen Schlüssels der Zertifizierungsstelle (30, 40) die Prüfinformation verifiziert (106).

2. Verfahren nach Anspruch 1, **dadurch gekennzeichnet, dass** der öffentliche Schlüssel des Benutzers auf dem Sicherheitselement (11, 21) hinterlegt ist.

3. Verfahren nach Anspruch 1 oder 2, **dadurch gekennzeichnet, dass** das Verfahren wechselseitig auf beiden Seiten eines Kommunikationskanals zwischen einem ersten Endgerät (10, 20) und einem weiteren Endgerät (10, 20) durchgeführt wird.

4. Verfahren nach einem der vorhergehenden Ansprüche, **dadurch gekennzeichnet, dass** zwischen den beiden Endgeräten (10, 20) ein gesicherter Kommunikationskanal mittels eines Diffie-Hellman Verfahrens aufgebaut wird.

5. Verfahren nach Anspruch 4, **dadurch gekennzeichnet, dass** der mittels Diffie-Hellman Verfahren vereinbarte Schlüssel bei der Erstellung der Prüfinformation einbezogen wird und das weitere Endgerät (20, 10) bei der Verifikation der Prüfinformation den mittels Diffie-Hellman Verfahren vereinbarten Schlüssel überprüft.

6. Verfahren nach einem der vorhergehenden Ansprüche, **dadurch gekennzeichnet, dass** das Erzeugen (102) eines Benutzerzertifikats unter Verwendung der persönlichen Benutzerdaten ein Selektieren von nicht als vertraulich gekennzeichneter Benutzerdaten umfasst.

7. Verfahren nach einem der vorhergehenden Ansprüche, **dadurch gekennzeichnet, dass** das Registrieren (100) des Benutzers ein Video-Identifikationsverfahren umfasst.

8. Verfahren nach einem der vorhergehenden Ansprüche, **dadurch gekennzeichnet, dass** das Benutzerzertifikat eine zeitliche Gültigkeit aufweist.

9. Verfahren nach einem der vorhergehenden Ansprüche, **dadurch gekennzeichnet, dass** das Benutzerzertifikat auf einem Endgerät (10, 20) und/oder auf einem Datenspeicher der Zertifizierungsstelle (30, 40) gespeichert wird.

10. Verfahren nach einem der vorhergehenden Ansprüche, **dadurch gekennzeichnet, dass** das Benutzerzertifikat von der Zertifizierungsstelle (30, 40) an das Endgerät (10, 20) übermittelt wird und anschließend von der Zertifizierungsstelle lokal gelöscht wird.

11. Verfahren nach einem der vorhergehenden Ansprüche, **dadurch gekennzeichnet, dass** das Endgerät (10, 20) als ein Mobiltelefon bereitgestellt wird, und das Sicherheitselement (11, 21) als Smartcard, welche drahtlos mit dem Mobiltelefon (10, 20) kommuniziert.

12. Verfahren nach Anspruch 11, **dadurch gekennzeichnet, dass** die Smartcard (11, 21) als eUICC oder in Form einer HCE ausgeführt ist.

13. Verfahren nach Anspruch 11, **dadurch gekennzeichnet, dass** die Smartcard (11, 21) als eine EMV-Karte vorliegt.

14. Kommunikationsanordnung zum Absichern einer Peer-to-Peer-Kommunikation zwischen zwei Endgeräten (10, 20) mittels Sicherheitselementen, umfassend:
- eine Zertifizierungsstelle zum Registrieren (100) eines Benutzers (12, 22) durch Verknüpfung der Nachweise des Besitzes eines Sicherheitselements (11, 21) und der Identität des Benutzers (12, 22), wobei der Nachweis der Identität anhand persönlicher Benutzerdaten erfolgt und der Nachweis des Besitzes anhand von Kartenzertifikaten, die den Zusammenhang zwischen Identifikationsdaten des Sicherheitselementes (11, 12) und auf dem Sicherheitselement (11, 12) gespeicherten Schlüsseln nachweisen und von der Zertifizierungsstelle (30, 40) geprüft werden;
- eine Recheneinheit eingerichtet zum Erzeugen (102) eines Benutzerzertifikats durch die Zertifizierungsstelle (30, 40) über die persönlichen Benutzerdaten sowie über einen öffentlichen Schlüssel des Benutzers, welcher auf dem Sicherheitselement (11, 21) hinterlegt ist oder in der Zertifizierungsstelle dem Benutzer nach Authentisierung zur Verfügung steht;
- eine Signatureinheit eingerichtet zum Signieren (103) einer Anfragenachricht durch das Sicherheitselement unter Verwendung eines dem öffentlichen Schlüssel des Benutzers entsprechenden geheimen Schlüssels oder durch die Zertifizierungsstelle (30, 40) unter Verwendung eines durch Zertifizierungsstelle (30, 40) zur Verfügung gestellten geheimem Schlüssels und Anfügen (104) des erzeugten (102) Benutzerzertifikats an die signierte Anfragenachricht durch das Endgerät (10, 20) oder durch die Zertifizierungsstelle zur Erstellung einer Prüfinformation; und
- eine weiteren Schnittstelleneinheit eingerichtet zum Übermitteln (105) der Prüfinformation an ein weiteres Endgerät (10, 20), welches anhand des öffentlichen Schlüssels die Prüfinformation verifiziert (106).

15. Computerprogrammprodukt mit Steuerbefehlen, welche das Verfahren gemäß einem der Ansprüche 1 bis 14 ausführen, wenn sie auf einem Computer zur Ausführung gebracht werden.

## Claims

1. A method for securing a peer-to-peer communication between two end devices (10, 20) by means of security elements, comprising:
- registering (100) a user (12, 22) at a certification entity (30, 40) by linking the proofs of possession of a security element (11, 21) and the identity of the user (12, 22), wherein the proof of identity tales place on the basis of personal user data and the proof of possession takes place on the basis of card certificates, which evidence the connection between the identification data of the security element (11, 12) and keys stored on the security element (11, 12) and which are checked by the certification entity (30, 40);
- producing (102) a user certificate by the certification entity (30, 40) over the personal user data and over a public key of the user stored on the security element (11, 12) or over a public key made available by the certification entity (30, 40) after authenticating the user (12, 22);
- signing (103) a request message by the security element (11, 12) while employing a secret key corresponding to the public key of the user or by the certification entity (30, 40) while employing a secret key made available by the certification entity (30, 40);
- attaching (104) the produced (102) user certificate to the signed request message by the end device (10, 20) or the certification entity (30, 40) to create a check information item; and
- transmitting (105) the check information item to a further end device (20, 10), which verifies (106) the check information item with the aid of the public key of the certification entity (30, 40).

2. The method according to claim 1, **characterized in that** the user's public key is deposited on the security element (11, 21).

3. The method according to claim 1 or 2, **characterized in that** the method is carried out alternately on both sides of a communication channel between a first end device (10, 20) and a further end device (10, 20).

4. The method according to any of the preceding claims, **characterized in that** a secure communication channel is set up between the two end devices (10, 20) by means of a Diffie-Hellman method.

5. The method according to claim 4, **characterized in that** the key agreed by means of the Diffie-Hellman method is included when the check information item is created and the further end device (20, 10) checks the key agreed by means of the Diffie-Hellman method when verifying the check information item.

6. The method according to any of the preceding claims, **characterized in that** the producing (102) of a user certificate while employing the personal user data comprises a selecting of user data not marked as confidential.

7. The method according to any of the preceding claims, **characterized in that** the registering (100) of the user comprises a video identification method.

8. The method according to any of the preceding claims, **characterized in that** the user certificate has a temporal validity.

9. The method according to any of the preceding claims, **characterized in that** the user certificate is stored on an end device (10, 20) and/or on a data memory of the certification entity (30, 40).

10. The method according to any of the preceding claims, **characterized in that** the user certificate is transmitted from the certification entity (30, 40) to the end device (10, 20) and is subsequently deleted locally by the certification entity.

11. The method according to any of the preceding claims, **characterized in that** the end device (10, 20) is made available as a mobile telephone and the security element (11, 21) as a smart card which communicates wirelessly with the mobile telephone (10, 20).

12. The method according to claim 11, **characterized in that** the smart card (11, 21) is executed as an eUICC or in the form of an HCE.

13. The method according to claim 11, **characterized in that** the smart card (11, 21) is present as an EMV card.

14. A communication arrangement for securing a peer-to-peer communication between two end devices (10, 20) by means of security elements, comprising:
- a certification entity for registering (100) a user (12, 22) by linking the proofs of possession of a security element (11, 21) and the identity of the user (12, 22), wherein the proof of identity tales place on the basis of personal user data and the proof of possession takes place on the basis of card certificates, which evidence the connection between the identification data of the security element (11, 12) and keys stored on the security element (11, 12) and which are checked by the certification entity (30, 40);
- a computing unit adapted for producing (102) a user certificate by the certification entity (30, 40) over the personal user data and over a public key of the user, which is deposited on the security element (11, 12) or which is available to the user at the certification entity after authentication;
- a signature unit adapted for signing (103) a request message by the security element while employing a secret key corresponding to the public key of the user or by the certification entity (30, 40) while employing a secret key made available by the certification entity (30, 40) and attaching (104) the produced (102) user certificate to the signed request message by the end device (10, 20) or by the certification entity to create a check information item; and
- a further interface unit adapted for transmitting (105) the check information item to a further end device (10, 20), which verifies (106) the check information item on the basis of the public key.

15. A computer program product with control commands which execute the method according to any of claims 1 to 14 when these are brought to execution on a computer.

## Revendications

1. Procédé de sécurisation d'une communication peer-to-peer entre deux terminaux (10, 20) au moyen d'éléments de sécurité, comprenant :
- enregistrement (100) d'un utilisateur (12, 22) auprès d'un organe de certification (30, 40) par liaison des preuves de la possession d'un élément de sécurité (11, 21) et de l'identité de l'utilisateur (12, 22), cependant que la preuve de l'identité a lieu au moyen de données personnelles utilisateur et la preuve de la possession a lieu au moyen de certificats de cartes qui prouvent le rapport entre données d'identification de l'élément de sécurité (11, 12) et des clés mémorisées sur l'élément de sécurité (11, 12) et sont contrôlées par l'organe de certification (30, 40) ;
- génération (102), par l'organe de certification (30, 40), d'un certificat utilisateur portant sur les données personnelles utilisateur ainsi que sur une clé publique de l'utilisateur mémorisée sur l'élément de sécurité (11, 12) ou sur une clé publique mise à disposition par l'organe de certification (30, 40) après authentification de l'utilisateur (12, 22) ;
- signature (103) d'un message de demande par l'élément de sécurité (11, 21) en utilisant une clé secrète correspondant à la clé publique de l'utilisateur ou par l'organe de certification (30, 40) en utilisant une clé secrète mise à disposition par l'organe de certification (30, 40) ;
- ajout (104) par le terminal (10, 20) ou par l'organe de certification (30, 40), au message de demande signé, du certificat utilisateur généré (102), aux fins de la production d'une information de contrôle ; et
- transmission (105) de l'information de contrôle à un autre terminal (20, 10) qui, à l'aide de la clé publique de l'organe de certification (30, 40), vérifie (106) l'information de contrôle.

2. Procédé selon la revendication 1, **caractérisé en ce que** la clé publique de l'utilisateur est stockée sur l'élément de sécurité (11, 21).

3. Procédé selon la revendication 1 ou 2, **caractérisé en ce que** le procédé est effectué mutuellement des deux côtés d'un canal de communication entre une premier terminal (10, 20) et un autre terminal (10, 20).

4. Procédé selon une des revendications précédentes, **caractérisé en ce que**, entre les deux terminaux (10, 20), un canal sécurisé de communication est établi au moyen d'un procédé Diffie-Hellman.

5. Procédé selon la revendication 4, **caractérisé en ce que** la clé convenue au moyen du procédé Diffie-Hellman est prise en compte lors de la production de l'information de contrôle et l'autre terminal (20, 10) vérifie lors de la vérification de l'information de contrôle la clé convenue au moyen du procédé Diffie-Hellman.

6. Procédé selon une des revendications précédentes, **caractérisé en ce que** la génération (102) d'un certificat utilisateur en utilisant les données personnelles utilisateur comprend une sélection de données utilisateur non marquées comme confidentielles.

7. Procédé selon une des revendications précédentes, **caractérisé en ce que** l'enregistrement (100) de l'utilisateur comprend un procédé d'identification vidéo.

8. Procédé selon une des revendications précédentes, **caractérisé en ce que** le certificat utilisateur a une validité temporelle.

9. Procédé selon une des revendications précédentes, **caractérisé en ce que** le certificat utilisateur est mémorisé sur un terminal (10, 20) et/ou sur une mémoire de données de l'organe de certification (30, 40).

10. Procédé selon une des revendications précédentes, **caractérisé en ce que** le certificat utilisateur est transmis par l'organe de certification (30, 40) au terminal (10, 20) et est ensuite effacé localement par l'organe de certification.

11. Procédé selon une des revendications précédentes, **caractérisé en ce que** le terminal (10, 20) est mis à disposition sous forme d'un téléphone mobile, et l'élément de sécurité (11, 21) sous forme de SmartCard qui communique sans fil avec le téléphone mobile (10, 20).

12. Procédé selon la revendication 11, **caractérisé en ce que** la SmartCard (11, 21) est réalisée sous forme de eUICC ou sous forme de HCE.

13. Procédé selon la revendication 11, **caractérisé en ce que** la SmartCard (11, 21) se trouve sous forme d'une carte EMV.

14. Agencement de communication destiné à la sécurisation d'une communication peer-to-peer entre deux terminaux (10, 20) au moyen d'éléments de sécurité, comprenant :
- un organe de certification pour l'enregistrement (100) d'un utilisateur (12, 22) par liaison des preuves de la possession d'un élément de sécurité (11, 21) et de l'identité de l'utilisateur (12, 22), cependant que la preuve de l'identité a lieu au moyen de données personnelles utilisateur et la preuve de la possession a lieu au moyen de certificats de cartes qui prouvent le rapport entre données d'identification de l'élément de sécurité (11, 12) et des clés mémorisées sur l'élément de sécurité (11, 12) et sont contrôlées par l'organe de certification (30, 40) ;
- une unité de calcul conçue pour la génération (102), par l'organe de certification (30, 40), d'un certificat utilisateur portant sur les données personnelles utilisateur ainsi que sur une clé publique de l'utilisateur qui est stockée sur l'élément de sécurité (11, 21) ou est, dans l'organe de certification, à la disposition de l'utilisateur après authentification ;
- une unité de signature conçue pour la signature (103) d'un message de demande par l'élément de sécurité en utilisant une clé secrète correspondant à la clé publique de l'utilisateur ou par l'organe de certification (30, 40) en utilisant une clé secrète mise à disposition par l'organe de certification (30, 40), et ajout (104) par le terminal (10, 20) ou par l'organe de certification, au message de demande signé, du certificat utilisateur généré (102), aux fins de la production d'une information de contrôle ; et
- une autre unité d'interface conçue pour la transmission (105) de l'information de contrôle à un autre terminal (10, 20), laquelle, à l'aide de la clé publique, vérifie (106) l'information de contrôle.

15. Produit programme d'ordinateur ayant des instructions de commande qui exécutent le procédé selon une des revendications de 1 à 14 quand elles sont mises à exécution sur un ordinateur.
